# EUROPÄISCHE PATENTSCHRIFT

(11) **EP 3 120 683 B1**
(45) Veröffentlichungstag und Bekanntmachung des Hinweises auf die Patenterteilung: **30.10.2019**
(21) Anmeldenummer: 16179716.2
(22) Anmeldetag: 15.07.2016
(51) Int. Cl.: A01D 34/73

(54) **MESSERROTOR FÜR EIN MÄHGERÄT**
BLADE ROTOR FOR A MOWING DEVICE
ROTOR À LAME POUR UNE FAUCHEUSE

(30) Priorität: 24.07.2015 DE 102015214051
(43) Veröffentlichungstag der Anmeldung: 25.01.2017
(73) Patentinhaber: Deere & Company, Moline, IL 61265 (US)
(72) Erfinder: Guiet, Lionel, 70100 Gray (FR); Dommange, Pierre, 70103 Arc-les-Gray (FR)
(74) Vertreter: Reichert, Christian

(56) Entgegenhaltungen:
- EP-A1- 2 497 353
- US-B1- 6 829 878

## Beschreibung

Die Erfindung betrifft einen Messerrotor eines Mähbalkens eines Mähgeräts, mit einer Mähscheibe, wenigstens einem Mähmesser, wenigstens einem an der Mähscheibe befestigten Lagerbolzen zur schwenkbaren Lagerung des Mähmessers einem an einer Unterseite der Mähscheibe angeordneten Federblech zur Halterung des Mähmessers am Lagerbolzen sowie wenigstens einem Schaber zum Entfernen von am Mähbalken haftenden Rückständen.

Mähgeräte sind bekannt und werden unter anderem in der Landwirtschaft eingesetzt, um stängeliges Erntegut oder Halmgut zu schneiden und auf dem Boden in einem Schwad zur Aufnahme durch beispielsweise eine Ballenpresse abzulegen. Die Mähgeräte können als Scheibenmäher ausgebildet sein und verfügen über mehrere nebeneinander angeordnete Messerrotoren, die an einem sogenannten Mähbalken angeordnet sind. Die Messerrotoren weisen rotierende ovalförmige Mähscheiben auf, an deren langen Enden Mähmesser schwenkbar an Lagerbolzen angeordnet sind. Die Mähmesser werden an einem an den Lagerbolzen ausgebildeten Lagerschaft zwischen einem Federblech, und der Mähscheibe schwenkbar gehalten, wobei das Federblech federnd mit einem Ende des Lagerbolzens in Eingriff steht und dieses zur Sicherung des Mähmessers auf dem Lagerbolzen verriegelt. Der Lagerbolzen ist üblicherweise in einer an der Mähscheibe ausgebildeten Befestigungsbohrung gelagert und wird an einer dem Federblech zugewandten Seite der Mähscheibe durch die Befestigungsbohrung geführt und an einer dem Federblech abgewandten Seite der Mähscheibe mit einer Schraubenmutter verschraubt. Bei Beschädigung oder Verschleiß eines Mähmessers, kann das Federblech mit einem Spannwerkzeug vom Lagerbolzenende gelöst werden, wodurch ein begrenzter Montageraum geschaffen wird, der die schnelle Entnahme des Mähmessers vom Lagerschaft ermöglicht.

Derartige Mähgeräte sind beispielsweise in der EP 2 497 353 A1 offenbart, wobei ein schnellwechselbares Mähmesser mit einer formhaften Gestaltung und einem Loch versehen ist, die einen bestimmten Abstand zueinander einhalten, um eine Verschleißanzeige zu schaffen. Eine weiteres Mähgerät der oben genannten Art offenbart die US 6 829 878 B1 in der ein Federblech unterhalb einer Mähscheibe angeordnet ist, wobei zwischen dem Federblech und der Unterseite der Mähscheibe ein Mähmesser eingespannt ist.

Beim Mähen von Erntegut bilden sich immer wieder Anhäufungen von Rückständen unterhalb der Mähscheibe und haften auf der Oberfläche des Mähbalkens. Dies kann die Rotationsbewegung der Mähscheiben, den Abtransport von geschnittenem Mähgut, sowie die Schnittqualität der Mähmesser negativ beeinflussen, so dass Vorkehrungen getroffen wurden, diese Ablagerungen zu verhindern. Derartige Vorkehrungen umfassen beispielsweise sogenannte Schaber oder Abstreifer, die zwischen Mähbalken und Mähscheibe angeordnet sind und zusammen mit der Mähscheibe über der Oberfläche der Mähbalken rotieren. Dabei wird sich anhäufendes Mähgut oder andere anhaftenden Rückstände von der Oberfläche des Mähbalkens abgestreift bzw. abgekratzt und letzterer somit sauber gehalten beziehungsweise gereinigt. Es ist unvermeidbar, dass derartige Schaber oder Abstreifer einem gewissen Verschleiß ausgesetzt sind und somit nach gegebener Zeit ausgetauscht werden müssen. Bis dahin unterliegen die Schaber oder Abstreifer einer kontinuierlichen Abnutzung, so dass auch die Reinigungswirkung kontinuierlich abnimmt.

Derartige Schaber oder Abstreifer sind als sich von der Mähscheibe auf die Oberfläche des Mähbalkens erstreckende Stege ausgebildet, die beispielsweise insbesondere mit der Mähscheibe verschweißt oder auf andere Weise untrennbar mit dieser verbunden sind. Ein Austausch der Schaber gestaltet sich in der Regel daher als aufwändig, kosten- und zeitintensiv und kann nicht unabhängig von der Mähscheibe durchgeführt werden, so dass man auch in der Materialauswahl eingeschränkt ist. Ferner ist auch ein Nachstellen oder Justieren oder auch der Einsatz verschiedener Schaber für verschiedene Arten oder Zustände von Erntegut in der Regel nicht möglich, ohne die Mähscheibe insgesamt auszutauschen.

Die der Erfindung zugrunde liegende Aufgabe wird darin gesehen, einen Messerrotor der eingangs genannten Art anzugeben, durch welchen die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Es wird ein Messerrotor der eingangs genannten Art offenbart, wobei der Schaber zwischen dem Federblech und der Unterseite der Mähscheibe angeordnet ist und an der Mähscheibe zwischen Lagerbolzen und einer Rotationsachse der Mähscheibe lösbar befestigt ist. Der Schaber ist damit unabhängig von der Mähscheibe lösbar und austauschbar ohne die Mähscheibe selbst abzumontieren bzw. austauschen zu müssen. Ferner ist durch die Anordnung des Schabers zwischen der Mähscheibe und dem Federblech bereits eine einfache Vorjustierung gegeben, so dass der Schaber von dem Federblech gegen die Unterseite der Mähscheibe gepresst und quasi in einen vorbestimmten Sitz gebracht wird, so dass insbesondere auch die Ausrichtung des Schabers und der korrekte Sitz vorgegeben wird. Die Möglichkeit, den Schaber unabhängig von der Mähscheibe zu lösen erlaubt eine schnelle Wartung und Montage, zum einen, zum anderen wird vermieden, dass die gesamte Mähscheibe ausgetauscht werden muss. Ferner ist eine Höhenanpassung des Schabers auf einfache Weise möglich, indem beispielsweise ein Unterlegblech oder eine andere Art Abstandshalter zwischen Mähscheibe und Schaber angeordnet wird. So kann der gleiche Schaber auch mit einer gewissen Abnutzung durch Verschleiß nachgestellt und weiter verwendet werden. Durch individuelle Anordnung der Schaber an der Mähscheibe ist auch eine unabhängige Rotationsrichtung der Mähscheibe am Mähbalken gegeben, da der Schaber je nach gewünschter Rotationsrichtung angeordnet bzw. ausgerichtet werden kann. So kann ein und dieselbe Mähscheibe sowohl rechtsrotierend als auch linksrotierend eingesetzt werden. Bei mit der Mähscheibe verbundenen Schabern muss stets zwischen einer rechtsrotierenden und linksrotierenden Mähscheibe mit entsprechend daran angeordneten und ausgerichteten Schabern unterschieden werden. Nicht zuletzt ist auch die Materialwahl unabhängig von der Mähscheibe zu treffen, da beispielsweise eine Schweißverbindung und eine entsprechende Eignung dafür entfallen kann, so dass je nach Wahl hoch-verschleißfestes Material oder eben besonders kostengünstiges Material für die Schaber eingesetzt werden kann, ohne auf eine Schweißeignung achten zu müssen.

Der Schaber weist eine Befestigungsplatte und einen sich von dort im Wesentlichen radial zur Rotationsachse der Mähscheibe (Vertikalachse) und parallel zur Oberfläche des Mähbalkens erstreckenden Abstreiffinger mit einer Abstreifkante auf. Der Abstreiffinger ist so ausgerichtet, dass dieser mit seiner Abstreifkante auf der Oberfläche der Mähscheibe eine kreisringförmige Fläche überfährt bzw. abfährt und diese Fläche von rückständigem oder daran haftendem Erntegut befreit. Die Befestigungsplatte und der Abstreiffinger können einteilig ausgebildet sein, beispielsweise als Formgußteil oder auch als Umform- oder Schmiedeteil. Der Schaber kann auch zweiteilig ausgebildet sein, so dass die Befestigungsplatte und der Abstreiffinger verschiedene Materialien mit unterschiedlichen Materialeigenschaften (Verformbarkeit, Materialhärte, Verschleißfestigkeit etc.) aufweisen können. Beispielsweise kann die Befestigungsplatte aus kostengünstigem Metall oder auch aus Kunststoff hergestellt sein und der Verschleiß behaftete Teil des Schabers, nämlich der Abstreiffinger, aus einem verschleißfesterem Material, beispielsweise aus gehärtetem Metall hergestellt und in den Kunststoff eingepresst oder sonst wie mit diesem verbunden sein. Es ist auch denkbar, dass der Abstreiffinger an die Befestigungsplatte anschraubbar ist, so dass bei einem Verschleiß des Schabers nur der Abstreiffinger ausgetauscht werden muss. In Verbindung mit einer zweiteiligen Ausführung des Schabers ist es auch denkbar, Abstreiffinger unterschiedlicher Geometrie und Form, insbesondere in Höhe und Länge unterschiedlich ausgebildet, anzufertigen, so dass je nach Anwendungserfordernissen Abstreiffinger mit optionalen Höhen (Höhe = axiale Erstreckung des Abstreiffingers in Vertikalrichtung zum Mähbalken) und Längen (Länge = radiale Erstreckung in der Rotationsebene der Mähscheibe) an die Befestigungsplatte anschraubbar sind.

Die radiale Erstreckung des Abstreiffingers erfolgt in Rotationsebene der Mähscheibe, wobei die radiale Richtung des Abstreiffingers in einem zum Mähmesser versetzten Winkel erfolgt (gemessen an der Erstreckungsrichtung des Mähmessers bei rotierender Mähscheibe). Je nach Rotationsrichtung der Mähscheibe ist der Winkel gegenüber dem Mähmesser links- oder rechtsseitig zum Mähmesser angeordnet.

Der Schaber kann über eine von der Oberseite der Mähscheibe zugängliche Schraubverbindung befestigt sein, wobei wenigstens ein sich durch eine an der Mähscheibe ausgebildete Durchgangsbohrung erstreckender Schraubbolzen vorgesehen ist, der mit der Befestigungsplatte des Schabers in Verbindung bringbar ist. So können beispielsweise zwei oder mehr Schraubbolzen vorgesehen sein, die sich durch entsprechende Durchgangsbohrungen an der Mähscheibe erstrecken und in die unter der Mähscheibe angeordnete Befestigungsplatte ragen und in dort entsprechend ausgebildete Schraubgewinde gedreht oder mit an der Befestigungsplatte angeordneten Schraubmuttern verbunden werden. Es ist auch denkbar an Stelle einer Schraubverbindung eine Steckverbindung vorzusehen, beispielsweise mit einer Klick- oder Rastverbindung.

An der Befestigungsplatte beidseitig des Lagerbolzens sind Aussparungen vorgesehen, durch die eine Ansetzpassung für ein zum Wechseln des Mähmessers ansetzbares Spannwerkzeug gebildet wird.

Ferner kann ein Spannwerkzeug zum Austausch eines Mähmessers vorgesehen sein. Das Spannwerkzeug ist beispielsweise in Form eines Hebelarms mit Gabelkopf ausgebildet und weist zwei zu einander parallel beabstandete Gabelschenkel auf, die zwischen Mähscheibe und Federblech angesetzt bzw. zwischen diese geschoben werden können. Gleichzeitig kann es dabei mit den Aussparungen des Schabers in Eingriff gebracht werden. Die Gabelschenkel des Hebelarms sind in einem Abstand zueinander angeordnet, der an auf der Befestigungsplatte ausgebildete Aussparungen angepasst ist. Setzt man nun das Spannwerkzeug an, das heißt, schiebt man nun die Gabelschenkel jeweils auf einer Seite des Mähmessers zwischen die Mähscheibe und das Federblech, so dienen die Aussparungen zum einen als Anschlag für die Gabelschenkelenden, und zum anderen als seitliche Führung der Gabelschenkel gegen seitliches Verrutschen. Die Gabelschenkel sind ferner (in Bezug auf einen horizontal ausgerichteten Hebelarm) in vertikaler Richtung derart nach oben gebogen, dass bei auf dem Federblech aufliegenden Gabelschenkeln durch Herunterführen des Hebelarms die Gabelschenkelenden nach oben gegen die Unterseite der Mähscheibe gedrückt werden und gleichzeitig eine Gabelschenkelauflagefläche in Richtung des Federblechs bewegt wird. Dadurch wird der Abstand zwischen Mähscheibe und Federblech vergrößert, so dass das Mähmesser vom Lagerbolzen bzw. vom Federblech frei gegeben wird.

Die oben dargestellte Ausführung eines Messerrotors eignet sich insbesondere für den Einsatz an Mähgeräten, welche mit Messerrotoren in Form von Mähscheiben, Mähtellern oder auch Mähtrommeln die mit oder ohne Aufbereitungseinheiten ausgebildet sein können. Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Draufsicht eines landwirtschaftlichen Fahrzeugs mit einem Mähgerät,
- Fig. 2: eine perspektivische Oberseitenansicht eines Mähbalkens mit Messerrotor des Mähgerätes aus Figur 1,
- Fig. 3: eine perspektivische Seitenansicht eines Teils des Mähbalkens mit Messerrotor aus Figur 2,
- Fig. 4: eine teilweise Explosionsdarstellung der Seitenansicht des Mähbalkens mit Messerrotor aus Figur 3,
- Fig. 5: eine unterseitige perspektivische Ansicht eines Schabers aus Figur 4,
- Fig. 6: eine oberseitige perspektivische Ansicht des Schabers aus Figur 4 und 5 und
- Fig. 7: eine perspektivische Seitenansicht eines Teils des Mähbalkens mit Messerrotor aus Figur 2 und einem zum Wechseln des Mähmessers angesetzten Spannwerkzeug.

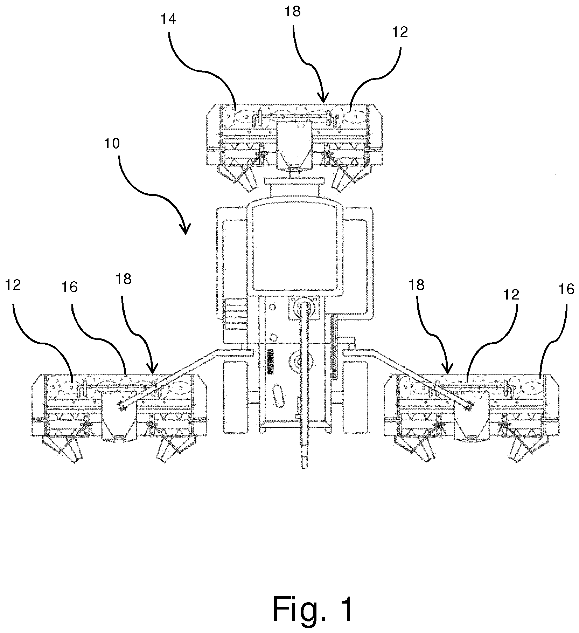

Das in Figur 1 dargestellte landwirtschaftliche Fahrzeug 10 stellt eine selbstfahrende Mähmaschine mit Mähgeräten 12 in Form von Frontmähwerk 14 und seitlichen Heckmähwerken 16 dar. Das hier als Selbstfahrer ausgebildete Fahrzeug 10 dient jedoch nur als Beispiel und könnte auch als landwirtschaftlicher Schlepper ausgebildet und mit entsprechend als Anbau- bzw. Anhängegeräte ausgebildeten Mähgeräten 12 bestückt sein.

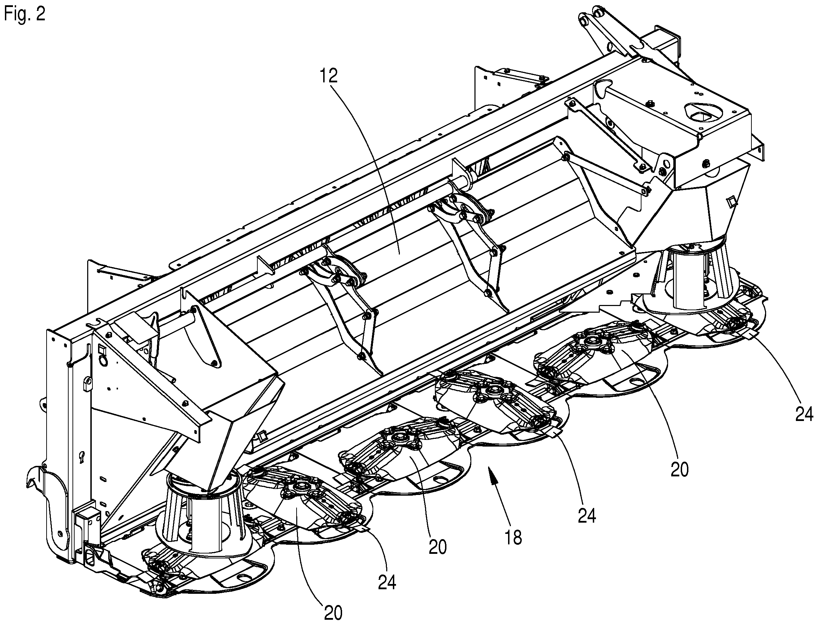

Wie in den Figuren 2 bis 4 näher dargestellt ist, umfasst ein Mähgerät 12 einen Mähbalken 18 mit mehreren daran montierten und rotatorisch angetriebenen Messerrotoren 20 (hier nur einer dargstellt).

Der Messerrotor 20 umfasst eine Mähscheibe 22 mit daran schwenkbar befestigten Mähmessern 24. Die Mähscheibe 22 ist in diesem Ausführungsbeispiel ovalförmig ausgebildet, wobei die Mähmesser 24 an den langen Enden des Ovals angeordnet sind. Der in diesem Ausführungsbeispiel als mit einer Mähscheibe 22 ausgebildete Messerrotor 20 könnte auch in bekannter Weise trommelförmig oder tellerförmig (Messertrommel, Messerteller) ausgebildet sein. Es sei darauf hingewiesen, dass in den Figuren 2 bis 4 die jeweils nach oben weisende Seite der Mähscheibe 22 die am Mähgerät 12 von dem zu bearbeitenden Boden abweisende Seite ist. Sie stellt zudem eine dem Betreiber für Montagezwecke zugängliche Seite der Mähscheibe 22 dar. Im weiteren Verlauf der Beschreibung wird diese Seite als Oberseite der Mähscheibe 22 und die entsprechend entgegengesetzt angeordnete Seite der Mähscheibe 22 als Unterseite bezeichnet.

Die Mähmesser 24 sind über eine an der Mähscheibe 22 ausgebildete Befestigungsbohrung 26 und einem daran befestigten Lagerbolzen 28 an den Mähscheiben 22 schwenkbar aufgehängt bzw. gelagert. Die Befestigungsbohrung 26 ist an einem an der Mähscheibe 22 ausgebildeten Verschleißschutz 30 zum Schutz des Lagerbolzens 28 bzw. zum Schutz der Befestigungsbohrung 26 und der Befestigung des Lagerbolzens 28 an der Mähscheibe eingebracht.

Zur Halterung und Schnellmontage eines Mähmessers 24 ist an der Unterseite der Mähscheibe 22 ein Federblech 32 angeordnet, welches sich ausgehend von der Mitte der Mähscheibe 22 zu den Enden der Mähscheibe 22 erstreckt. An den Endbereichen des Federblechs 32 ist jeweils eine Halterungsbohrung 34 ausgebildet, die mit dem Lagerbolzen 28 in Eingriff steht, derart, dass ein Ende 36 des Lagerbolzens 28 in der Halterungsbohrung 34 aufgenommenen bzw. eingespannt wird.

Der Lagerbolzen 28 umfasst einen Gewindeschaft 38 und einen daran angrenzenden Aufnahmeschaft 40. Mit einer Schraubenmutter 42 wird der Lagerbolzen 28 an seinem Gewindeschaft 38 an der Befestigungsbohrung befestigt. Ferner umfasst der Lagerbolzen 28 einen am Aufnahmeschaft 40 angrenzenden Lagerschaft 44 für das Mähmesser 24. Der Durchmesser am Ende 36 des Lagerbolzens 28 ist derart bemessen, dass das Ende 36 in die Halterungsbohrung 34 einführbar ist. Der Durchmesser der Halterungsbohrung 34 am Federblech 32 ist derart bemessen, dass das Federblech am Rand der Halterungsbohrung 34 an einem Absatz am Ende 36 des Lagerbolzens zur Anlage kommen kann.

Das Mähmesser 24 weist an einem einer Mähmesserklinge 54 gegenüberliegendem Ende eine Lagerbohrung 56 auf, deren Durchmesser derart bemessen ist, dass sie über den Lagerschaft 44 des Lagerbolzens 28 führbar ist.

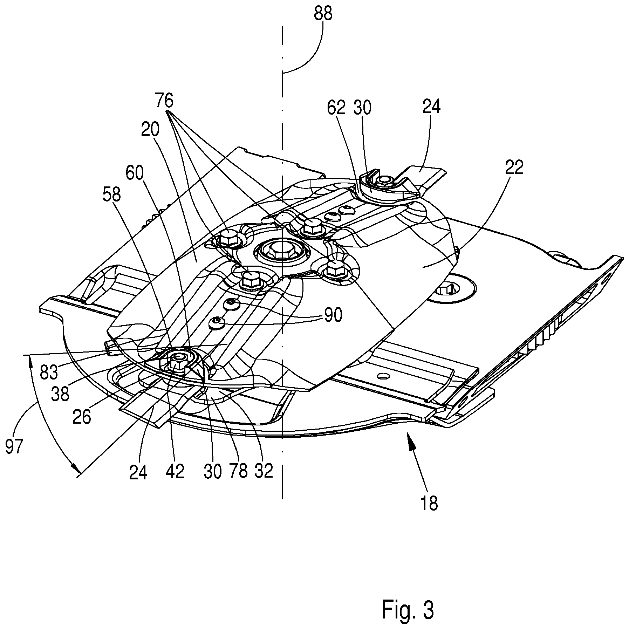

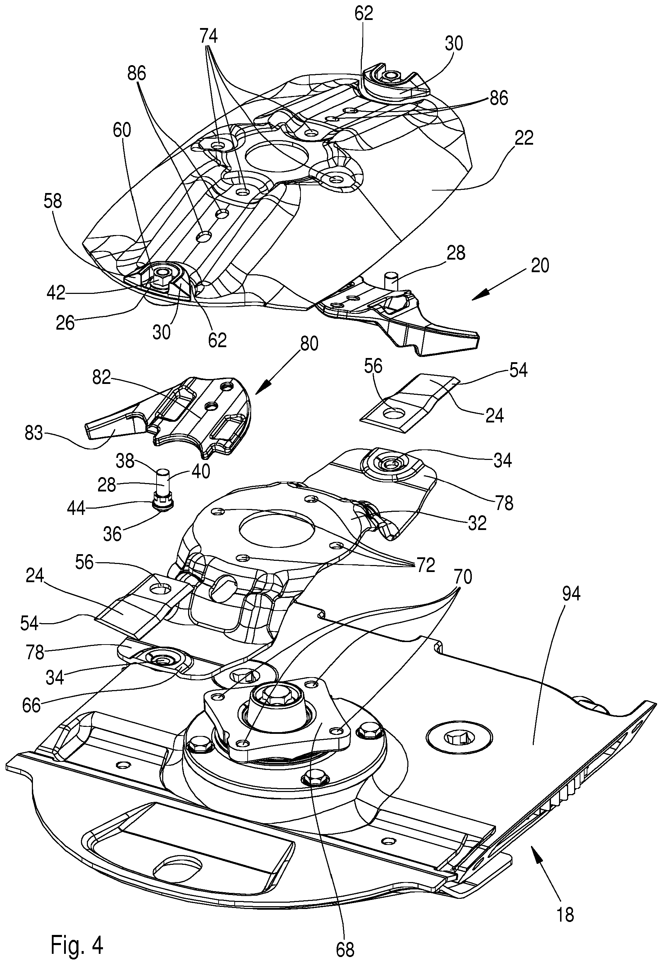

Wie in den Figuren 3 und 4 zu sehen ist, weist der Verschleißschutz 30 einen U-förmigen Kragen 58 mit einem Kragenschaft 60 auf, der bis über die Schraubenmutter 42 ragt und diese größtenteils umschließt, wobei der U-förmige Kragen 58 an einer Seite geöffnet ist. An der Oberseite der Mähscheibe 22 ist im Bereich der Befestigungsbohrung 26 eine die Befestigungsbohrung 26 umgebende Aussparung 62 vorgesehen.

Ferner ist am Federblech 32 ein die Halterungsbohrung 34 umgebender und sich in Richtung des Mähmessers 24 bzw. der Mähscheibe 22 erstreckender Haltewulst 66 ausgebildet. Der Haltewulst 66 ist derart ausgeformt, dass das Mähmesser 24 an seiner Unterseite an einem die Lagerbohrung 56 umgebenden Randbereich auf dem Haltewulst 66 zur Anlage kommen kann, so dass das Mähmesser 24 auf Höhe des Lagerschaftes 44 gehalten wird.

Nach alledem stellt sich eine Montage des Lagerbolzens 28 an die Mähscheibe 22 zur schwenkbaren Lagerung des Mähmessers 24 wie folgt dar: Der Lagerbolzen 28 wird mit seinem Gewindebereich 38 voraus von der Unterseite der Mähscheibe 22 durch die Befestigungsbohrung 26 geführt und mittels der Schraubenmutter 42 befestigt. Das Ende 36 des Lagerbolzens 36 wird in die Halterungsbohrung 34 des Federblechs 32 bewegt wird, wobei zuvor das Mähmesser 24 auf den Lagerschaft 44 geführt wird. Bei montiertem Lagerbolzen 28 ragt dieser nun bis in die Halterungsbohrung 34 des Federblechs 32 herein, wodurch das Ende 36 des Lagerbolzens 28 blockiert wird und das Mähmesser zwischen Federblech 32 und Aufnahmeschaft 40 eingeschlossen ist. Der Lagerbolzen 28 ist nun derart an der Mähscheibe 22 befestigt, dass der Lagerschaft 44 sich ausgehend von der Befestigungsbohrung 26 in Richtung Unterseite der Mähscheibe 22 erstreckt und mit seinem Ende 36 in die Halterungsbohrung 34 des Federblechs 32 ragt. Das Mähmesser 24 wird dabei durch den Haltewulst 66 am Federblech 32 auf Höhe des Lagerschaftes 44 gehalten. Bei Inbetriebnahme des Messerrotors 20 kann sich das Mähmesser 24 durch die dabei entstehenden Fliehkräfte ungehindert in den vollständigen Lagersitz bewegen und um den Lagerschaft 44 schwenken. Eine schwenkbare Lagerung des Mähmessers 24 am Lagerschaft 44 dient dazu, dass das Mähmesser 24 bei Mäharbeiten eine gewisse Ausweichbewegung durchführen kann, wenn es auf einen Widerstand, beispielsweise einem Stein, trifft.

Der Mähbalken 18 ist ferner mit einem Rotorflansch 68 ausgebildet, auf den das Federblech 32 und die Mähscheibe 22 befestigbar sind, wobei an dem Rotorflansch 68 Gewindebohrungen 70 und am Federblech 32 und Mähscheibe 22 entsprechende Befestigungsbohrungen 72, 74 ausgebildet sind. Mittels Schraubbozen 76 wird die Mähscheibe 22 und das Federblech 32 an den Rotorflansch 68 befestigt, wobei das Federblech 32 zwischen dem Rotorflansch 68 und der Mähscheibe 22 eingespannt ist. Das Federblech 32 ist dabei derart geformt und ausgebildet, dass sich freie Federblechenden 78 zu den langen Enden des Ovals der Mähscheibe 22 hin erstrecken, wobei zwischen den Federblechenden 78 und der Unterseite der Mähscheibe 22 das Mähmesser 24 angeordnet ist und die Federblechenden 78 eine in Richtung der Unterseite der Mähscheibe 22 wirkende Federkraft ausüben.

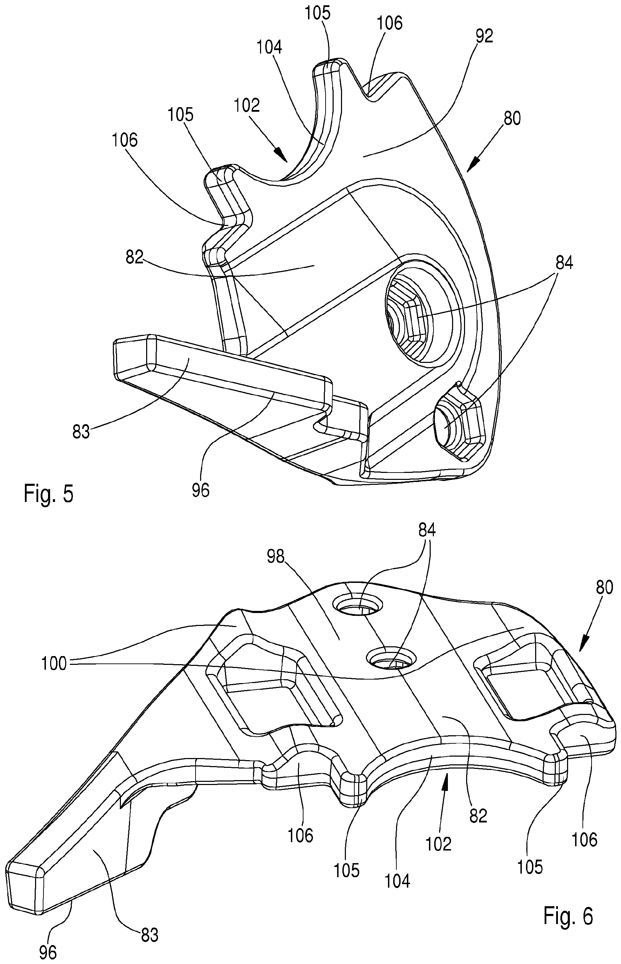

Zwischen den freien Federblechenden 78 und der Mähscheibe 22 ist an beiden langen Enden des Ovals der Mähscheibe 22 ein Schaber 80 angeordnet, der eine Befestigungsplatte 82 und einen Abstreiffinger 83 umfasst. Der Schaber 80 ist im Detail in den Figuren 5 und 6 dargestellt. Die Befestigungsplatte 82 weist Befestigungsbohrungen 84 auf, die mit an der Mähscheibe 22 angeordneten Befestigungsbohrungen 86 korrespondieren, wobei die Befestigungsplatte 82 zwischen dem Lagerbolzen 28 und einer Rotationsachse 88 der Mähscheibe 22 mittels Schrauben 90 und Schraubmuttern (nicht gezeigt) an der Mähscheibe 22 befestigt ist. Der Schaber 80 ist derart ausgebildet, dass sich, bei an die Mähscheibe 22 montiertem Schaber 80, der Abstreiffinger 83 durch einen länglichen Steg ausbildet, der sich seitlich eines jeweiligen Federblechendes 78 in seiner Längsrichtung von der Befestigungsplatte 82 im Wesentlichen parallel zur Erstreckungsebene der Befestigungsplatte 82 in Richtung Außenseite der Mähscheibe 22 erstreckt und über den Rand des langen Endes des Ovals der Mähscheibe 22 hinausragt. Ferner erstreckt sich der Abstreiffinger 83 ausgehend von einer Unterseite 92 der Befestigungsplatte 82 in Richtung einer Oberseite 94 des Mähbalkens 18, so dass am Abstreiffinger 83 unmittelbar oberhalb des Mähbalkens 18 eine Abstreifkante 96 ausgebildet ist, die bei Rotation der Mähscheibe 22 eine auf der Oberseite 96 des Mähbalkens 18 abgebildete Kreisringfläche definiert. Eine radiale Erstreckung des Abstreiffingers 83 erfolgt in Rotationsebene der Mähscheibe 22, als radial zur Rotationsachse 88, wobei die radiale Richtung des Abstreiffingers in einem zum Mähmesser 24 versetzten Winkel 97 erfolgt (gemessen an der Erstreckungsrichtung des Mähmessers 24 bei rotierender Mähscheibe 22). Je nach Rotationsrichtung der Mähscheibe 22 ist der Winkel 97 gegenüber dem Mähmesser 24 links- oder rechtsseitig zum Mähmesser 24 angeordnet.

Auf einer Oberseite 98 der Befestigungsplatte 82 sind Ausbuchtungen 100 ausgebildet, die sich im montierten Zustand des Schabers 80 seitlich entlang einer an der Unterseite der Mähscheibe 22 ausgeformten Ausbuchtung (eine sich in Richtung des Federblechs 32 erstreckende Ausbuchtung; nicht dargestellt) erstrecken und eine Einpassung für den Schaber 80 bilden.

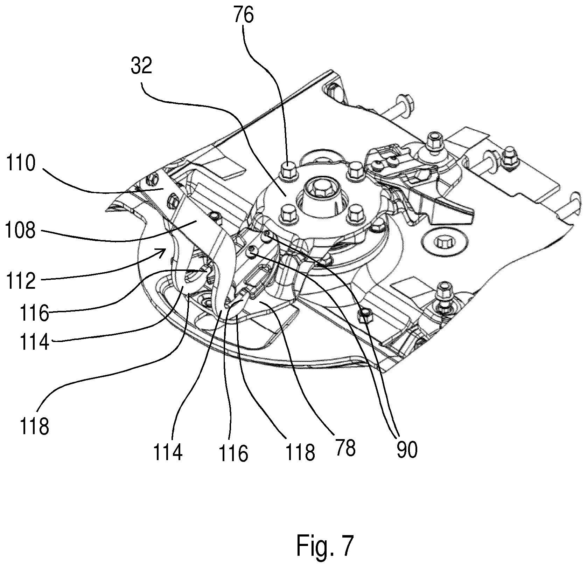

An einem dem Lagerbolzen 28 zugewandten Ende 102 der Befestigungsplatte 80 ist eine sich um den Lagerbolzen 28 erstreckende bogenförmige Aussparung 104 vorgesehen, an deren Bogenenden 105 sich jeweils ein Absatz 106 anschließt. Die Absätze 106 in Verbindung mit den Bogenenden 105 dienen als Ansetzpassung für ein zum Wechseln des Mähmessers 22 ansetzbares Spannwerkzeug 108, was anschaulich in Figur 7 dargestellt ist.

Das Spannwerkzeug 108 weist einen Hebelarm 110 oder Griff mit einem Gabelkopf 112 auf, wobei am Gabelkopf 112 zwei zu einander parallel beabstandete Gabelschenkel 114 ausgebildet sind, die zwischen Mähscheibe 22 und Federblech 32 angesetzt bzw. zwischen diese geschoben werden können. Gleichzeitig kann das Spannwerkzeug 108 dabei mit den Aussparungen 106 des Schabers in Eingriff gebracht werden. Die Gabelschenkel 114 des Hebelarms 110 sind in einem Abstand zueinander angeordnet, wie es auch die auf der Befestigungsplatte 82 ausgebildeten Aussparungen 106 sind bzw. wie auch die Bogenenden 105 der bogenförmigen Aussparung 104 zu einander beabstandet sind. Setzt man nun das Spannwerkzeug 108 an, das heißt, schiebt man die Gabelschenkel 114 jeweils auf einer Seite des Mähmessers 24 zwischen die Mähscheibe 22 und das Federblech 32, so dienen die Aussparungen 106 zum einen als Anschlag für die Gabelschenkelenden 116, und zum anderen in Verbindung mit den Bogenenden 105 der bogenförmigen Aussparung 106 als seitliche Führung der Gabelschenkel 114 gegen seitliches Verrutschen.

Die Gabelschenkel 114 sind in Bezug auf einen horizontal ausgerichteten Hebelarm 110 bogenförmig mit im Wesentlichen in vertikale Richtung weisenden Gabelschenkelenden 116 ausgebildet, so dass, wenn das Spannwerkzeug 108 zwischen die Mähscheibe 22 und dem Federblech 32 des Messerrotors 20 eingespannt und mit den Aussparungen 106 in Eingriff gebracht ist, eine Abwärtsbewegung des Hebelarms 110 die Gabelschenkelenden 118 gegen die Unterseite der Mähscheibe 22 drückt und die Gabelschenkel 114 das Federblech 32 gleichzeitig herunterdrücken. Die Gabelschenkel 114 sind mit anderen Worten, in Bezug auf einen horizontal ausgerichteten Hebelarm 110, nach oben gebogen, so dass bei angesetztem Spannwerkzeug 108 und auf dem Federblech 32 aufliegenden Gabelschenkeln 114, wie es in Figur 7 dargestellt ist, durch Herunterführen des Hebelarms 110 die Gabelschenkelenden 116 gegen die Unterseite der Mähscheibe 22 gedrückt und gleichzeitig eine Gabelschenkelauflagefläche 118 in Richtung des Federblechs 32 bewegt (gehebelt) wird. Dadurch wird der Abstand zwischen Mähscheibe 22 und Federblech 32 vergrößert, bis das Mähmesser 24 vom Lagerbolzen 28 bzw. von der am Federblech 32 ausgebildeten Halterungsbohrung 34 frei gegeben ist und ausgewechselt werden kann.

## Patentansprüche

1. Messerrotor (20) eines Mähbalkens (18) eines Mähgeräts (10), mit einer Mähscheibe (22), wenigstens einem Mähmesser (24), wenigstens einem an der Mähscheibe (22) befestigten Lagerbolzen (28), zur schwenkbaren Lagerung des Mähmessers (24), einem an einer Unterseite der Mähscheibe (22) angeordneten Federblech (32), zur Halterung des Mähmessers (24) am Lagerbolzen (28), **gekennzeichnet durch** wenigstens einem Schaber (80) zum Entfernen von am Mähbalken (18) haftenden Rückständen, wobei der Schaber (80) zwischen dem Federblech (32) und der Unterseite der Mähscheibe (22) angeordnet und an der Mähscheibe (22) zwischen Lagerbolzen (28) und einer Rotationsachse (88) der Mähscheibe (22) lösbar befestigt ist.

2. Messerrotor (20) nach Anspruch 1, **dadurch gekennzeichnet, dass** der Schaber (80) eine Befestigungsplatte (82) und einen sich von dort im Wesentlichen radial zur Rotationsachse (88) der Mähscheibe (22) und parallel zur Oberfläche (94) des Mähbalkens (18) erstreckenden Abstreiffinger (83) mit einer Abstreifkante (96) umfasst, so dass die Abstreifkante (96) des Abstreiffingers (83) bei Rotation der Mähscheibe (22) eine kreisringförmige Fläche überfährt.

3. Messerrotor (20) nach Anspruch 2, **dadurch gekennzeichnet, dass** die radiale Erstreckung des Abstreiffingers (83) in einer Rotationsebene des Mähmessers (24) in einem zum Mähmesser (24) versetzten Winkel (97) erfolgt.

4. Messerrotor (20) nach einem der Ansprüche 2 oder 3, **dadurch gekennzeichnet, dass** der Schaber (80) über eine von der Oberseite der Mähscheibe (22) zugängliche Schraubverbindung befestigbar ist, wobei wenigstens ein sich durch eine an der Mähscheibe (22) ausgebildete Durchgangsbohrung (86) erstreckender Schraubbolzen (90) vorgesehen ist, der mit der Befestigungsplatte (82) des Schabers (80) in Verbindung bringbar ist.

5. Messerrotor (20) nach einem der Ansprüche 2 bis 4, **dadurch gekennzeichnet, dass** an der Befestigungsplatte (82) beidseitig des Lagerbolzens (28) Aussparungen (106) vorgesehen sind, durch die eine Ansetzpassung für ein zum Wechseln des Mähmessers (22) ansetzbares Spannwerkzeug (108) gebildet wird.

6. Mähgerät (12) mit einem Mähbalken (18) und wenigstens einem Messerrotor (20) nach einem der Ansprüche 1 bis 5.

## Claims

1. Blade rotor (20) of a cutter bar (18) of a mowing appliance (10), having a mowing disc (22), at least one mowing blade (24), at least one bearing bolt (28), fastened to the mowing disc (22), for mounting the mowing blade (24) in a pivotable manner, a spring sheet (32), arranged on an underside of the mowing disc (22), for holding the mowing blade (24) on the bearing bolt (28), **characterized by** at least one scraper (80) for removing remnants stuck to the cutter bar (18), wherein the scraper (80) is arranged between the spring sheet (32) and the underside of the mowing disc (22) and is releasably fastened to the mowing disc (22) between the bearing bolt (28) and an axis of rotation (88) of the mowing disc (22).

2. Blade rotor (20) according to Claim 1, **characterized in that** the scraper (80) comprises a fastening plate (82) and a stripping finger (83) extending therefrom substantially radially to the axis of rotation (88) of the mowing disc (22) and parallel to the surface (94) of the cutter bar (18) and having a stripping edge (96), such that the stripping edge (96) of the stripping finger (83) travels over an annular area upon rotation of the mowing disc (22).

3. Blade rotor (20) according to Claim 2, **characterized in that** the stripping finger (83) extends radially in a rotational plane of the mowing blade (24) at an offset angle (97) to the mowing blade (24).

4. Blade rotor (20) according to either of Claims 2 and 3, **characterized in that** the scraper (80) is able to be fastened via a screw connection accessible from the top side of the mowing disc (22), wherein at least one threaded bolt (90) extending through a through-bore (86) formed in the mowing disc (22) is provided, said threaded bolt (90) being able to be connected to the fastening plate (82) of the scraper (80) .

5. Blade rotor (20) according to one of Claims 2 to 4, **characterized in that** cutouts (106) are provided in the fastening plate (82) on both sides of the bearing bolt (28), said cutouts (106) forming an attachment fit for a tensioning tool (108) that is able to be attached in order to change the mowing blade (22).

6. Mowing appliance (12) having a cutter bar (18) and at least one blade rotor (20) according to one of Claims 1 to 5.

## Revendications

1. Rotor porte-lame (20) d'une barre de coupe (18) d'une faucheuse (10), ledit rotor porte-lame comprenant un disque de fauchage (22), au moins une lame de faucheuse (24), au moins un tourillon (28) qui est fixé au disque de fauchage (22) et qui sert à supporter de manière pivotante la lame de fauchage (24), une plaque à ressort (32) qui est disposée sur un côté inférieur du disque de fauchage (22) et qui sert à maintenir la lame de fauchage (24) sur le tourillon (28), **caractérisé par** au moins un racloir (80) destiné à éliminer des résidus adhérant à la barre de fauchage (18), le racloir (80) étant disposé entre la plaque à ressort (32) et le côté inférieur du disque de fauchage (22) et étant fixé de manière amovible au disque de fauchage (22) entre le tourillon (28) et un axe de rotation (88) du disque de fauchage (22).

2. Rotor porte-lame (20) selon la revendication 1, **caractérisé en ce que** le racloir (80) comporte une plaque de fixation (82) et un doigt de raclage (83) qui s'étend depuis ladite plaque de fixation sensiblement radialement à l'axe de rotation (88) du disque de fauchage (22) et parallèlement à la surface (94) de la barre de fauchage (18) et qui comporte un bord de raclage (96) de sorte que le bord de raclage (96) du doigt de raclage (83) passe sur une surface annulaire lors de la rotation du disque de fauchage (22).

3. Rotor porte-lame (20) selon la revendication 2, **caractérisé en ce que** l'extension radiale du doigt de raclage (83) est effectuée dans un plan de rotation de la lame de fauchage (24) avec un décalage d'un angle (97) par rapport à la lame de fauchage (24).

4. Rotor porte-lame (20) selon l'une des revendications 2 ou 3, **caractérisé en ce que** le racloir (80) peut être fixé par une liaison par vis accessible depuis le côté supérieur du disque de fauchage (22), au moins un boulon fileté (90) est prévu qui s'étend à travers un trou traversant (86) ménagé sur le disque de fauchage (22) et qui peut être relié à la plaque de fixation (82) du racloir (80).

5. Rotor porte-lame (20) selon l'une des revendications 2 à 4, **caractérisé en ce que** des évidements (106) sont ménagés au niveau de la plaque de fixation (82) des deux côtés du tourillon (28), lesquels évidements permettent de former un ajustement d'adaptation destiné à un outil de serrage (108) adaptable pour changer la lame de fauchage (22).

6. Faucheuse (12) comprenant une barre de coupe (18) et au moins un rotor porte-lame (20) selon l'une des revendications 1 à 5.
